# EUROPÄISCHE PATENTANMELDUNG

(11) **EP 1 759 653 A1**
(43) Veröffentlichungstag der Anmeldung: **07.03.2007**
(21) Anmeldenummer: 05019327.5
(22) Anmeldetag: 06.09.2005
(51) Int. Cl.: A61C 1/18, A61C 1/08, A61B 19/00

(54) **Adapter für ein medizinisches Handstück, medizinisches Handstück sowie medizinische Versorgungseinheit**

(71) Anmelder: W & H Dentalwerk Bürmoos GmbH, 5111 Bürmoos (AT)
(72) Erfinder: Rauchenzauner, Stephan, 5110 Oberndorf bei Salzburg (AT)
(74) Vertreter: Appelt, Christian W.

(57) **Zusammenfassung**

Die vorliegende Erfindung betrifft einen Adapter für ein medizinisches Handstück, sowie eine medizinische Versorgungseinheit, die einen Schaltkreis umfassen, der so ausgebildet ist, daß eine von einer Versorgungseinheit zur Verfügung gestellte elektrische Energieversorgung geprüft und automatisch so aufbereitet wird, daß sie einer beliebigen Lichtquelle eines medizinischen Handstücks zum Betrieb der Lichtquelle zugeführt werden kann.

## Beschreibung

Die vorliegende Erfindung betrifft einen Adapter für ein medizinisches Handstück, über den die von einer Versorgungseinheit zur Verfügung stellbare Energieversorgung dem Handstück zuführbar ist, sowie ein medizinisches Handstück mit einer Lichtquelle und einem zugehörigen Lichtquellenschaltkreis und eine medizinische Versorgungseinheit, an die mindestens ein medizinisches Handstück anschließbar ist. Die Erfindung betrifft ferner ein Verfahren zum Aufbereiten einer von einer Versorgungseinheit zur Verfügung gestellten Energieversorgung für eine Lichtquelle beziehungsweise einen Lichtquellenschaltkreis eines medizinischen Handstücks.

Medizinische Handstücke, und insbesondere zahnmedizinische Handstücke, für die die vorliegenden Erfindung eine besondere Bedeutung hat, umfassen regelmäßig Lichtquellen und einen zugehörigen Lichtquellenschaltkreis. Die Lichtquellen können unterschiedlichen Zwekken dienen, insbesondere werden die Lichtquellen regelmäßig zur Beleuchtung eingesetzt, beispielsweise im dentalmedizinischen Bereich zur Beleuchtung des zu behandelnden beziehungsweise zu bearbeitenden Bereiches im Mundraum des Patienten. Die Lichtquellen können jedoch auch anderen Zwecken, insbesondere Behandlungs- oder Bearbeitungszwecken dienen, wobei hier lediglich beispielhaft eine Lichtquelle zur Polymerisation von lichthärtendem Kunststoff genannt wird, die insbesondere ebenfalls im dentalmedizinischen Bereich Anwendung findet.

Die Handstücke müssen zur Versorgung mit Energie üblicherweise an eine Versorgungseinheit angeschlossen werden, wobei die Versorgungseinheit bevorzugt so ausgelegt ist, daß Handstücke unterschiedlicher Art an die Versorgungseinheit und bevorzugt auch an im wesentlichen identische Anschlußstücke der Versorgungseinheit angeschlossen werden.

Problematisch ist hierbei, daß die unterschiedlichen Lichtquellen des medizinischen Handstücks auf ganz unterschiedliche Weise ausgebildet sein können, und daher eine unterschiedliche Energieversorgung benötigen. Beispielsweise muß bei dem Einsatz einer LED als Lichtquelle eine korrekte Polung der Kontakte sichergestellt werden.

Aus der US 2004/0166464 A1 ist beispielsweise ein Adapter bekannt, der an einem Handstück angeschlossen werden kann, wobei das Handstück beispielsweise mit einer LED-Lichtquelle ausgestattet ist. Gemäß dieser Druckschrift ist ein Adapter vorgesehen, der manuell zwischen zwei Zuständen hin- und hergeschaltet werden kann, um die Polung der zur Verfügung gestellten elektrischen Energie an die erforderliche Polung zur Versorgung der LED anzupassen.

Ausgehend von diesem Stand der Technik ist es eine Aufgabe der vorliegenden Erfindung, ein System zur Verfügung zu stellen, das den Einsatz von unterschiedlichen Handstücken mit unterschiedlichen Lichtquellen und den Anschluß an einer Versorgungseinheit ermöglicht und Fehlbedienungen durch den Benutzer verhindert.

Diese Aufgabe wird durch einen Adapter gemäß Anspruch 1, ein medizinisches Handstück gemäß Anspruch 7, eine medizinische Versorgungseinheit gemäß Anspruch 16 und ein Verfahren gemäß Anspruch 23 gelöst. Die Ansprüche 2 bis 6 betreffen besonders vorteilhafte Ausführungsformen des erfindungsgemäßen Adapters gemäß Anspruch 1, die Ansprüche 8 bis 15 betreffen besonders vorteilhafte Ausführungsformen des erfindungsgemäßen medizinischen Handstücks gemäß Anspruch 7, die Ansprüche 17 bis 22 betreffen besonders bevorzugte Ausführungsformen der erfindungsgemäßen medizinischen Versorgungseinheit gemäß Anspruch 16 und die Ansprüche 24 und 25 betreffen besonders vorteilhafte Ausführungsformen des erfindungsgemäßen Verfahrens gemäß Anspruch 23.

Ein Adapter, ein medizinisches Handstück oder eine medizinische Versorgungseinheit gemäß der Erfindung umfassen einen Schaltkreis, der mit einer Ausgangs-Schaltungsvorrichtung und einer Eingangs-Schaltungsvorrichtung verbunden ist, wobei der Schaltkreis so ausgelegt ist, daß er auf der Grundlage der von der Ausgangs-Schaltungsvorrichtung zur Verfügung gestellten Signale die Energieversorgung so aufbereitet, daß einem Lichtquellenschaltkreis einer Lichtquelle eines Handstücks eine Energie mit den erforderlichen Eigenschaften zur Verfügung stellbar ist, wobei die erforderlichen Eigenschaften der Energieversorgung, neben anderen, sowohl die Spannung als auch die Stromstärke der Energieversorgung, umfassen, insbesondere aber auch eine eventuell erforderliche Polung der Energieversorgung umfassen, die insbesondere in dem Falle erforderlich ist, daß eine LED als Lichtquelle eingesetzt wird, was immer häufiger der Fall ist, aufgrund der vorteilhaften Eigenschaften der LEDs, sowohl im Hinblick auf ihre Effizienz als auch im Hinblick auf ihre Abstrahlungseigenschaften. Die Polung ist beispielsweise auch bei Gasentladungslampen von Bedeutung, während im Falle von Glühlampen eine Polung in der Regel nicht erforderlich ist, da diese üblicherweise mit Gleichstrom beliebiger Polung oder auch mit Wechselstrom betrieben werden können. Dennoch ist es jedoch auch bei Glühlampen als Lichtquellen gegebenenfalls gewünscht, eine besondere Polung oder eine besondere Art der Stromversorgung, sei es Gleichstrom oder Wechselstrom, zur Verfügung zu stellen. Bevorzugt ist dabei der Schaltkreis eines erfindungsgemäßen Adapters, eines medizinischen Handstückes oder einer medizinischen Versorgungseinheit so ausgelegt, daß neben der Polung auch die Art des Leuchtmittels beziehungsweise des Instruments bestimmbar sind, also beispielsweise bestimmbar ist, ob es sich bei dem Leuchtmittel um eine LED, eine Glühbirne, eine Gasentladungslampe oder andere Leuchtmittel handelt beziehungsweise ob als Instrument ein bestimmtes Sonderinstrument eingesetzt ist. Die Erkennung ist bevorzugt hierbei unabhängig davon, ob eine Spannungs- oder eine Stromquelle eingesetzt wird.

In diesem Zusammenhang soll ferner darauf hingewiesen werden, daß der Begriff "medizinische Versorgungseinheit" im Sinne dieser Erfindung in einem weiten Umfang gesehen werden kann: Zum einen kann es sich bei einer solchen medizinischen Versorgungseinheit um eine dentale Versorgungseinheit, beispielsweise einen Dentalstuhl handeln, zum anderen kann es sich bei der medizinischen Versorgungseinheit im Sinne dieser Erfindung jedoch auch schlicht um eine Energieversorgungseinheit wie beispielsweise eine Steckdose, handeln, an die direkt oder indirekt, also über weitere Zwischenelemente, wie Adapter oder ähnliches, ein Handstück mit einer Lichtquelle angeschlossen werden kann.

Ferner soll an dieser Stelle darauf hingewiesen werden, daß unter einem "Adapter" im Sinne der Erfindung zwar typischerweise relativ kleine Elemente zu verstehen sind, die insbesondere direkt an ein Handstück angeschlossen werden und sich insbesondere in der Form beziehungsweise dem Durchmesser und den Dimensionen dem Handstück anpassen, der Begriff Adapter im Sinne der Erfindung jedoch auch in einem weiteren Sinne verstanden werden muß, also auch ein an sich beliebiges Zwischenelement oder Zwischenbauteil betreffen kann, das an beliebiger Stelle zwischen einem Handstück einerseits und einer Versorgungseinheit oder Energieversorgung andererseits angeordnet sein kann. Auch kann der Adapter im Sinne der Erfindung ein Bauteil sein, daß neben den erfindungsgemäßen und beschriebenen Funktionen weitere Funktionen aufweist.

Ein erfindungsgemäßes System hat insbesondere den Vorteil, daß durch den erfindungsgemäßen Schaltkreis und unter Nutzung der erfindungsgemäßen Eingang-Schaltungsvorrichtung und der Ausgang-Schaltungsvorrichtung automatisch sowohl die zur Verfügung gestellte Energie einerseits als auch die von der Lichtquelle benötigte Energie andererseits geprüft und erkannt wird, woraufhin automatisch mittels des Schaltkreises die Energieversorgung so aufbereitet wird, daß das Gesamtsystem funktioniert, insbesondere der Lichtquelle und dem Lichtquellenschaltkreis eine Energie mit den erforderlichen Eigenschaften zur Verfügung gestellt wird, ohne daß der Benutzer irgendwelche Schritte einleiten oder Einstellungen vornehmen muß, so daß sich der Benutzer beziehungsweise Arzt vollständig auf seine eigentliche Aufgabe konzentrieren kann. Auch wird sichergestellt, daß Beschädigungen der Lichtquelle beziehungsweise des Lichtquellenschaltkreises oder sonstiger Bauteile, die beispielsweise durch einen Anschluß an eine "falsche" Energieversorgung auftreten können, vermieden werden.

Die Erfindung hat ferner den Vorteil, daß zu einem bestehenden System, das beispielsweise eine medizinische Versorgungseinheit und eine festgelegte Anzahl medizinischer Handstücke umfaßt, zu einem späteren Zeitpunkt zusätzliche Handstücke hinzugefügt werden können, ohne prüfen zu müssen, ob die Energieversorgungsleitungen der Versorgungseinheit zu dem zusätzlichen Handstück passen, wobei an dieser Stelle angemerkt werden soll, daß es teilweise schwierig sein kann, die korrekte Verkabelung der medizinischen Versorgungseinheit zu prüfen, insbesondere für einen Benutzer des Systems, der mit den elektrotechnischen Details des Systems nicht vertraut ist, was die Bedeutung der Erfindung für den praktischen Gebrauch unterstreicht.

Ein Adapter gemäß der vorliegenden Erfindung hat den Vorteil, daß er im wesentlichen unabhängig von der Vielzahl der medizinischen Handstücke einerseits und der medizinischen Versorgungseinheit andererseits verwendet werden kann und grundsätzlich zwischen die Versorgungseinheit und das medizinische Handstück eingesetzt werden kann. Im Falle eines medizinischen Handstücks gemäß der vorliegenden Erfindung ist ein solcher Adapter nicht notwendig, dies ist insbesondere dann vorteilhaft, wenn beispielsweise ein zusätzliches medizinisches Handstück gemäß der Erfindung zu einem bestehenden System hinzugefügt wird, weil in diesem Falle auf die Prüfung der Kompabilität der Energieversorgung verzichtet werden kann. Eine medizinische Versorgungseinheit gemäß der vorliegenden Erfindung hat den Vorteil, daß bereits an dieser Basiseinheit alle entsprechenden Vorrichtungen vorgesehen sind, die einen Anschluß im wesentlichen beliebiger Handstücke mit Lichtquellen ermöglicht, ohne daß das Handstück selbst erfindungsgemäß ausgestattet werden muß oder ein zusätzlicher Adapter vorgesehen werden muß. Insbesondere bei der Neuanschaffung eines Gesamtsystems bietet sich daher eine medizinische Versorgungseinheit gemäß der vorliegenden Erfindung an, da bei allen nachfolgenden Elementen, insbesondere zusätzlichen medizinischen Handstükken, keine weiteren Vorkehrungen mehr getroffen werden müssen.

Bei Vorrichtungen gemäß der vorliegenden Erfindung können unterschiedliche Baugruppen beziehungsweise Elemente zum Einsatz kommen, insbesondere können sogenannte Verpolungsschutz-Schaltungen verwendet werden, die aus einer, meist jedoch aus mehreren Dioden aufgebaut sind und gegebenenfalls zusätzliche Bauelemente umfassen. Eine mögliche Schaltung ist die sogenannte Brückenschaltung von Dioden bei der die Dioden so angeordnet und verschaltet sind, daß deren Flußrichtung und Sperrrichtung so ausgenutzt wird, daß eine zugeführte Energie unabhängig von der Eingangspolung mit einer festgelegten Polungsrichtung weitergeleitet wird. Solche Verpolungsschutz-Schaltungen sind insbesondere beim Einsatz einer LED als Lichtquelle von Bedeutung.

Ein Schaltkreis, der in dem erfindungsgemäßen Adapter, dem medizinischen Handstück oder der Versorgungseinheit eingesetzt wird, umfaßt bevorzugt eine Logikschaltung, wobei die Logikschaltung sowohl durch Software und gegebenenfalls einen entsprechenden Mikroprozessor als auch durch Logikbausteine oder eine Kombination von Software und Logikbausteinen realisiert werden kann. Ein solcher Schaltkreis umfaßt bei einer bevorzugten Ausführungsform ferner einen DC/DC-Wandler, z.B. einen sogenannten Step-Up Konverter, um gegebenenfalls die zur Verfügung gestellte Energie an die gewünschten Eigenschaften anzupassen.

Die erfindungsgemäßen Vorrichtungen umfassen ferner eine Ausgangs-Schaltungsvorrichtung, welche die anzuschließende Lichtquelle und den Lichtquellenschaltkreis, beispielsweise auch die Polung einer LED, detektiert. Bei einer bevorzugten Ausführungsform erfolgt diese Detektion insbesondere durch eine oder mehrere Strom-Spannungsmessungen, durch welche die interessierenden Eigenschaften der angeschlossenen Lichtquelle, beispielsweise die Polung, identifizierbar ist.

Dazu wird bevorzugt beispielsweise ein Verfahren verwendet, das die folgenden Schritte umfaßt: Anlegen einer definierten Spannung oder eines definierten Stromes, bevorzugt in einem Bereich, in dem die Lichtquellen, beispielsweise die LED, sich noch nicht im Betriebszustand befindet, d.h. noch nicht leuchtet beziehungsweise Strahlung abgibt, und Messen entweder des fließenden Stromes, bei definierter Spannung, oder Messen der über die Lichtquelle abfallenden Spannung, bei definiertem Strom. Das Ergebnis der Messung dient der Charakterisierung der Lichtquelle, wobei die Messung beispielsweise bei einer LED einen bestimmten Strom- und Spannungswert angibt, der sich auf der für die LED charakterisierenden Strom-Spannungs-Kennlinie befindet. Liegt dieser Meßpunkt in einem Bereich der Kennlinie, der die Flußrichtung charakterisiert, so ist die Polung korrekt, liegt dieser Punkt jedoch auf der Kennlinie, die der Sperrrichtung zuzuordnen ist, muß die Polung der zur Verfügung gestellten Energie im Vergleich zu der Polung der Energie, die während des Meßvorganges zugeführt wird, vertauscht werden.

Bevorzugt ist eine charakterisierende Kennlinie mindestens einer LED in einem Mikroprozessor gespeichert, wobei in dem Mikroprozessor, mittels Softwareunterstützung, auch der Vergleich zwischen der Meßergebnissen und der mindestens einen Kennlinie durchgeführt wird.

Selbstverständlich kann alternativ, zusätzlich oder teilweise eine Hardware-basierende Logik mittels Logikbausteinen realisiert werden.

Neben der Einstellung einer gegebenenfalls erforderlichen Polung einer Lichtquelle beziehungsweise eines Lichtquellenschaltkreises, die bevorzugt durch eine elektronische Schaltung aber auch durch jedes andere beliebige Mittel erfolgen kann, beispielsweise durch einen Fixregler beziehungsweise einen integrierten Schaltregler, kann die Aufbereitung der Energieversorgung durch die elektronische Schaltung oder durch integrierte Schaltkreise erfolgen, die die Spannung oder den Strom auf den für die Lichtquelle charakteristischen Wert regeln.

Stromwerte können beispielsweise bei gewünschter konstanter Lichtleistung konstant gehalten werden oder verändert werden, wenn beispielsweise eine Veränderung der Lichtleistung gewünscht ist. Bei einer besonderen Ausführungsform der erfindungsgemäßen Vorrichtungen können sogenannte Step-Up-Konverter verwendet werden, um die gewünschten Strom- und Spannungsverhältnisse für die Lichtquelle zur Verfügung zu stellen.

Mit den erfindungsgemäßen Vorrichtungen ist es möglich, nicht nur eine Polung zu erkennen, sondern, bevorzugt auch mittels der auf einem Mikroprozessor hinterlegten Werte, beispielsweise Tabellen oder Kennlinien, die Art der Lichtquelle und deren gewünschten Einsatzzweck zu erkennen, beispielsweise ob eine Lichtquelle zur Beleuchtung vorgesehen ist, oder eine Behandlungsfunktion, wie zum Beispiel eine Polymerisierung, aufweist.

Es soll an dieser Stelle darauf hingewiesen werden, daß es bei einer besonderen Vorrichtung beziehungsweise einem besonderen Verfahren vorgesehen ist, mehrere Messungen durchzuführen, so daß diese beispielsweise mit den auf einem Mikroprozessor hinterlegten Werten verglichen werden können, um eine eindeutige Zuordnung und Identifizierung der angeschlossenen Lichtquelle oder eines Sonderinstruments sicherzustellen.

Bei einer bevorzugten Ausführungsform laufen die nachfolgenden Messungen im wesentlichen identisch ab, wie oben beschrieben, jedoch mit unterschiedlichen Strom- und/oder Spannungswerten.

Üblicherweise ist eine Versorgungseinheit gemäß der Erfindung so ausgebildet, daß sie an standardübliche elektrische Energieversorgungen angeschlossen werden kann, beispielsweise in einem Bereich von 220 bis 230 Volt bei ca. 50 Hz für Europa, oder aber von ca. 100 - 110 Volt bei ca. 60 Hz in den USA.

Es soll an dieser Stelle darauf hingewiesen werden, daß unter dem Begriff "Energieversorgungseinheit" der medizinischen Versorgungseinheit im Sinne dieser Erfindung sowohl eine übliche Energiequelle verstanden werden kann, der Begriff "Energieversorgungseinheit" jedoch auch in einem weiteren Sinne verstanden werden muß, daher auch ein Element, einen Baustein oder auch nur einen Leiter umfaßt, der eine Energie, die der medizinischen Versorgungseinheit beispielsweise von Extern zugeführt wird, im wesentlichen weiterleitet, während beispielsweise der medizinischen Versorgungseinheit an dieser Stelle neben der von Extern zugeleiteten elektrischen Energie auch Druckluft zugeführt wird, so daß die entsprechenden Energiezuführungen (Strom und gegebenenfalls Druckluft und/oder sonstige Medien) auch der medizinischen Versorgungseinheit von extern zugeführt werden, wie es üblicherweise der Fall ist, da die medizinische Versorgungseinheit in der Regel nicht selbst die Energie, beispielsweise mit einem Generator, produziert, sondern zumindest an ein externes Energieversorgungsnetz angeschlossen wird, wie oben erläutert.

Diese und weitere Merkmale der vorliegenden Erfindung werden anhand der nachfolgenden Zeichnungen, die sich auf bevorzugte Ausführungsformen beziehen, noch deutlicher:
- Fig. 1: zeigt schematisch ein System gemäß der vorliegenden Erfindung;
- Fig. 2: zeigt eine schematische Darstellung der Elektronik, die in einer Ausführungsform der vorliegenden Erfindung zum Einsatz kommt;
- Fig. 3: zeigt ein Flußdiagramm einer Logikschaltung, die gemäß einer Ausführungsform bei der vorliegenden Erfindung zum Einsatz kommt, und
- Fig. 4: zeigt einen Teilbereich einer Elektronik, die in einer weiteren Ausführungsform der vorliegenden Erfindung zum Einsatz kommt.

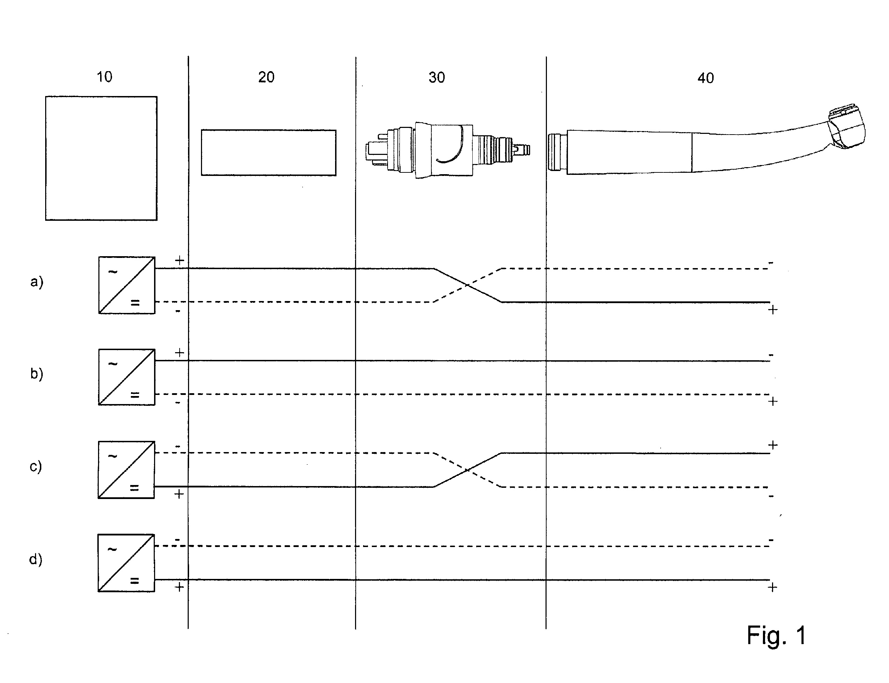

Figur 1 zeigt schematisch eine Ausführungsform eines Gesamtsystems gemäß der vorliegenden Erfindung, das eine Dentaleinheit 10, einen Versorgungsschlauch 20, einen Adapter 30 und ein Handstück 40 umfaßt. Bei der in Figur 1 gezeigten Ausführungsform umfaßt der Adapter 30 sowohl die Eingangs-Schaltungsvorrichtung als auch die Ausgang-Schaltungsvorrichtung und den Schaltkreis, der mit der Eingang- und der Ausgangs-Schaltungsvorrichtung verbunden ist. Bei anderen Ausführungsformen gemäß der Erfindung können diese Elemente jedoch auch in der Versorgungseinheit 10 oder dem Handstück 40 vorgesehen sein.

Figur 1 zeigt ferner schematisch und lediglich beispielhaft die möglichen Kombinationen im Hinblick auf eine Polung einer Lichtquelle, die in dem Handstück 40 vorgesehen ist, wobei die Versorgungseinheit 10 mit einer Wechselspannung versorgt wird, die innerhalb der Versorgungseinheit 10 in eine Gleichspannung mit einer festgelegten Polung umgewandelt wird.

Diese Gleichspannung mit festgelegter Polung wird durch den Versorgungsschlauch 20 an den Adapter 30 weitergeleitet, wobei erfindungsgemäß der Adapter sowohl die Polung der von der Versorgungseinheit 10 zur Verfügung gestellten Energie als auch die notwendige Polung für die Lichtquelle in dem Handstück 40 überprüft, wobei die Polung in den Fällen, in denen die Polung der Versorgungseinheit und der Lichtquelle übereinstimmen, nicht verändert wird, wie in den Fällen a) und c) dargestellt ist, während in den Fällen, in denen die Polung nicht übereinstimmt, der in dem Adapter 30 vorgesehene Schaltkreis die Polung umdreht, wie in den Fällen b) und d) schematisch dargestellt.

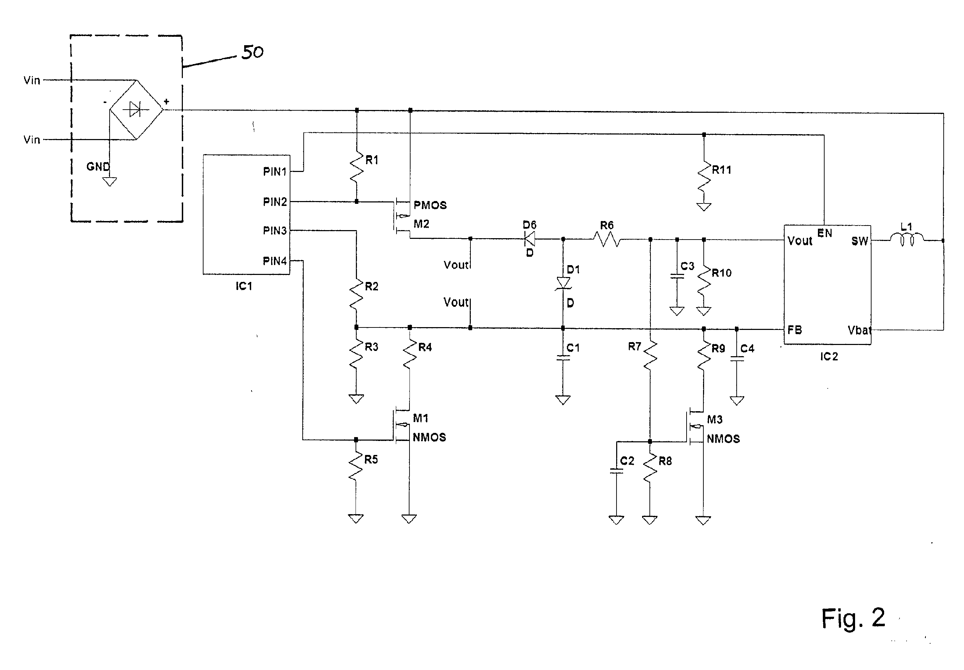

Figur 2 zeigt eine schematische Darstellung der Elektronik gemäß einer bevorzugten Ausführungsform, wobei eingangsseitige Kontaktvorrichtungen Vᵢₙ zum Anschluß an die Energieversorgung der Versorgungseinheit vorgesehen sind. Es soll an dieser Stelle darauf hingewiesen werden, daß die Kontaktvorrichtungen sowohl direkt als auch indirekt, also mit möglichen Zwischenelementen, beispielsweise einem Versorgungsschlauch oder ähnlichem, an die Energieversorgung der Versorgungseinheit angeschlossen werden können. Üblicherweise wird der elektrische Kontakt durch einen Berührungskontakt hergestellt, es ist jedoch auch denkbar, einen berührungslosen Kontakt, beispielsweise mittels Induktion, vorzusehen.

Die dargestellte Elektronik prüft sowohl die Energieversorgung, insbesondere die Polung, der Versorgungseinheit einerseits als auch die erforderliche Energieversorgung, insbesondere die Polung, für die Lichtquelle andererseits, so daß dem anzuschließenden Handstück über ausgangsseitigen Kontaktvorrichtungen Vₒᵤₜ eine Energieversorgung mit den erforderlichen Eigenschaften zur Verfügung gestellt wird.

Der mit dem Bezugszeichen 50 versehene Baustein umfaßt im wesentlichen die Eingangs-Schaltungsvorrichtung und ist bei dieser Ausführungsform als sogenannte Brückengleichrichterschaltung ausgebildet, die über die eingangsseitigen Kontaktvorrichtungen Vᵢₙ die Energieversorgung der Versorgungseinheit unabhängig von der Polung entgegennehmen kann. Die Brückengleichrichterschaltung ist dabei so beschaffen, daß die Energie in jedem Falle weitergeleitet wird, jedoch mit grundsätzlich definierter Polung. Die Katode (Minus-Pol) wird im Schaltbild auch als GND (Ground) bezeichnet, eine galvanische Verbindung zu diesem ist mit dem auf der Spitze stehenden Dreieck symbolisch dargestellt.

An einer ausgangsseitigen Kontaktvorrichtung Vₒᵤₜ kann der Lichtquellenschaltkreis der Lichtquelle angeschlossen werden, so daß die Lichtquelle mit der erforderlichen Energie versorgt wird.

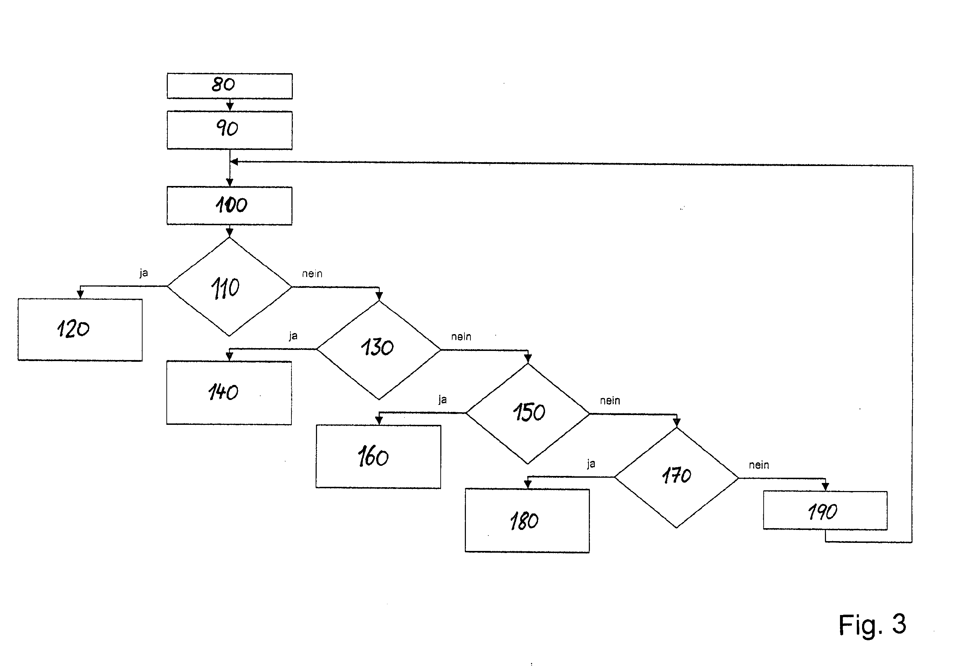

Die Logikschaltung IC1 dient der Erkennung der Art der Polung sowie gegebenenfalls der Lichtquelle oder des Instruments, so daß IC 1 als Ausgangs-Schaltungsvorrichtung dient. Diese Logikschaltung IC1 kann sowohl durch einen Mikroprozessor und eine entsprechende Software als auch durch reine Hardware, also Logikbausteine, sowie durch Kombinationen hiervon realisiert werden, zur Funktionsweise wird insbesondere auf das Flußdiagramm in Figur 3 verwiesen.

Der Schaltkreis, der mit der Eingangs- und der Ausgangs-Schaltungsvorrichtung verbunden und so ausgelegt ist, daß er auf der Grundlage der von der Eingangs- und der Ausgangs-Schaltungsvorrichtung zur Verfügung gestellten Signalen die von der Versorgungseinheit zur Verfügung gestellte Energieversorgung so aufbereitet, daß dem Lichtquellenschaltkreis über die ausgangsseitige Kontaktvorrichtung Vₒᵤₜ eine Energie mit den erforderlichen Eigenschaften zur Verfügung stellbar ist, umfaßt einen DC/DC-Wandler, siehe IC2, welcher eine vorgegebene Gleichspannung in eine Gleichspannung anderer Art beziehungsweise Höhe wandelt, zum Beispiel durch gezieltes Ansteuern von elektrischen Energiespeichern (Spulen, Kondensatoren). Der integrierte Schaltkreis IC2 wird jedoch nur bei der Verwendung einer LED beziehungsweise eine Lichtquelle benötigt, die eine vorgegebene Polung oder eine von der durch die Einheit zur Verfügung gestellten Energeiversorgung abweichende Energieversorgung benötigt, erfordert, wobei der IC2 über den Eingang EN (enable) aktiviert wird. Die richtige Polung der elektrischen Energie wird durch entsprechendes Ansteuern der Transistoren M1 bis M3 gewährleistet.

Wird an die ausgangsseitigen Kontaktvorrichtungen Vₒᵤₜ beispielsweise eine Miniaturglühlampe als Lichtquelle angeschlossen, ist es erforderlich, die von der Versorgungseinheit zur Verfügung gestellte Energie direkt auf diese ausgangsseitige Kontaktvorrichtung Vₒᵤₜ und damit direkt auf die Glühbirne zu schalten. Dies wird wiederum durch die Ansteuerung der Transistoren M1 bis M3 gewährleistet. Die Differenzierung zwischen den einzelnen Leuchtmitteln sowie die für das jeweilige Leuchtmittel notwendige Ansteuerung des integrierten Schaltkreises IC2 und der Transistoren M1 bis M3 erfolgt durch die Logikschaltung IC1, siehe hierzu insbesondere Figur 3 und die zugehörigen Erläuterungen.

Figur 3 zeigt schematisch und in Form eine Flußdiagramms eine Logikschaltung gemäß einer bevorzugten Ausführungsform für ein Handstück mit einer beliebigen Lichtquelle. Diese Logikschaltung ist bevorzugt mittels Software und einem Mikroprozessor realisiert, wobei die Logikschaltung, nach einem möglichen "Reset" 80 und Ansteuern der Transistoren 90 insbesondere eine erste oder mehrere Messungen an der Last, nämlich an dem anzuschließenden Handstück, durchführt, siehe Schritt 100, um festzustellen, ob eine Lichtquelle eine besondere Polung erfordert, wie beispielsweise bei einer LED, und ob die für die Messung verwendete Energie, in Flußrichtung geschaltet ist oder nicht, siehe 110.

In dem Falle, in dem die Lichtquelle (LED) bei der Testmessung in Flußrichtung geschaltet ist, kann die Polung beibehalten werden, so daß der integrierte Schaltkreis IC2, siehe Figur 2, und die Transistoren für den korrekten LED-Betrieb angesteuert werden, siehe Schritt 120.

Sollte sich die Lichtquelle (LED) bei der Testmessung in Sperrrichtung befinden, siehe 130, wird die Polung im Vergleich zur Polung der Testmessungen umgekehrt, so daß der integrierte Schaltkreise IC2, siehe Figur 2, und die Transistoren für den korrekten LED-Betrieb angesteuert werden, siehe Schritt 140.

In dem Falle jedoch, in dem die Testmessungen ergeben, daß keine besondere Polung erforderlich ist und keine Fluß- oder Sperrrichtung definiert werden kann, prüft das System, ob sich eine Miniatur-Lampe in dem Handstück befindet, siehe 150, wobei bei positivem Ergebnis, bevorzugt mittels Überprüfung von auf einem Mikroprozessor oder entsprechenden Speichervorrichtungen abgelegten Tabellen, Daten oder Kennlinien, die Transistoren für den korrekten Betrieb der Lampe, beispielsweise einer Glühlampe, angesteuert werden, siehe Schritt 160.

Sollten die Testmessungen zu dem Ergebnis führen, daß keiner der oben angeführten Fälle vorliegt, wird davon ausgegangen, daß ein Sonderinstrument, insbesondere eine Lichtquelle mit einem zum Sonderinstrument gehörenden elektronischen Schaltkreis vorliegt, die nicht zur Beleuchtung, sondern beispielsweise zum Aushärten von lichthärtendem Kunststoff verwendet wird, wobei entsprechend weitere Testmessungen durchgeführt werden, die wiederum bevorzugt mit entsprechenden Daten verglichen werden. Sollten die Testmessungen dazuführen, daß ein bestimmtes Sonderinstrument erkannt wird, siehe 170, werden der integrierte Schaltkreis IC2, siehe Figur 2, und die Transistoren für den korrekten Betrieb dieses erkannten Sonderinstruments angesteuert, siehe Schritt 180.

Sollten die weiteren Testmessungen nicht zu einem eindeutigen Ergebnis führen, wird davon ausgegangen, daß die Messungen nicht erfolgreich gewesen sind, wobei das System dann bevorzugt erneut die unterschiedlichen Testmessungen, wie oben beschrieben, durchführt, siehe Schritt 190.

Bevorzugt können diese Schritte mehrere Male durchgeführt werden, wobei nach einer festgelegten Anzahl, beispielsweise zehn Versuchen, bevorzugt eine Fehlermeldung ausgegeben wird.

Bei einer besonderen Ausführungsform wird beim Schritt 110 beispielsweise eine Spannung von 1 V angelegt und ein Strom von beispielsweise 20 mA gemessen. Für jede mögliche Beleuchtungsquelle, beispielsweise LED, Glühlampe etc., ist eine Strom-Spannungskurve oder
- Tabelle oder ähnliches hinterlegt, und die Elektronik vergleicht das Strom/Spannungs-Meßwertepaar (1 V, 20 mA) mit jeder dieser Kurven beziehungsweise jeder der Tabellen, in einer vorgegebenen Reihenfolge, beispielsweise zuerst mit den Werten oder Tabellen, die der LED zugeordnet sind, beispielsweise zuerst in Flußrichtung, dann in Sperrrichtung, dann mit den Kurven beziehungsweise den Werten einer Glühbirne usw., wobei bevorzugt erst nach dem Prüfen der vorgegebenen möglichen Leuchtmittel Werte für ein Sonderinstrument geprüft werden.

Sobald das gemessene Wertepaar mit einem Punkt einer dieser Kurven oder einem Wert in einer Tabelle übereinstimmt, ist die Art der Lichtquelle, die Polung und/oder das Sonderinstrument erkannt.

Ist das Meßwertepaar nicht oder zumindest nicht eindeutig zuzuordnen, dann wird eine zweite Messung durchgeführt, bei einer besonders bevorzugten Ausführungsform mit einer unterschiedlichen Ausgangsspannung, beispielsweise als 1,5 V.

Es soll an dieser Stelle darauf hingewiesen werden, daß ein erfindungsgemäßes System so ausgelegt ist, daß die einzelnen Testmessungen, beispielsweise durch neue Software, Eingabe zusätzlicher Daten und/oder Kennlinien auf einem Speicher, auf den ein Mikroprozessor zugreifen kann, oder auch durch den Einsatz neuer Logikbausteine an mögliche weitere Lichtquellen, sei es zur Beleuchtung oder seien es sogenannte "Sonderinstrumente", ergänzt und angepaßt werden kann.

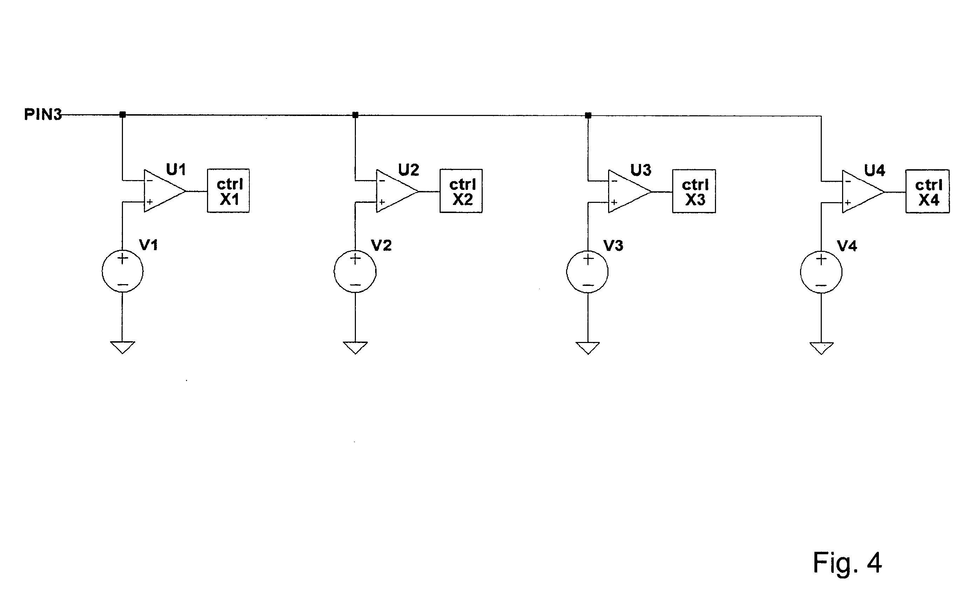

Figur 4 zeigt einen Teilbereich einer Elektronik, wie sie in einer weiteren Ausführungsform der Erfindung eingesetzt werden kann, wobei der in Figur 4 gezeigte Teilbereich insbesondere der Erkennung der Art der Lichtquelle und/oder des Lichtquellenschaltkreises beziehungsweise des Sonderinstruments dient.

Die in Figur 4 mit V1 bis V4 bezeichneten Bauelemente entsprechen Referenzspannungsquellen, die eine solche Spannung zur Verfügung stellen, die ausgewählten, charakteristischen Spannungen von möglichen Leuchtmitteln beziehungsweise Leuchtquellen und/oder Lichtquellenschaltkreisen entsprechen. Diese Spannungsquellen können beispielsweise durch die Verwendung von Standardbauteilen, beispielsweise dem Standardbauteile LM317 realisiert werden.

Die in Figur 4 mit U1 bis U4 beschrifteten Bauelemente entsprechen Komparatoren, die die Spannung der jeweiligen Referenzspannungsquellen V1 bis V4 mit der auch an PIN3 anliegenden Spannung vergleichen. Die Komparatoren sind dabei so ausgelegt, daß bei Übereinstimmung dieser beiden Spannungen, d.h. bei gleich großen angelegten Spannungen ein logisches "High"-Signal am Ausgang geliefert wird, wobei dieses Signal an entsprechende Ansteuerschaltungen, in Figur 4 mit ctr1X1 bis ctrlX4 bezeichnet, weitergegeben wird.

Durch eine solche Anordnung von Referenzspannungsquellen V1 bis V4 können unter Verwendung der Komparatoren U1 bis U4 das Leuchtmittel beziehungsweise die Lichtquelle und/oder der Lichtquellenschaltkreis identifiziert werden, wobei die Ansteuerschaltungen ctrlX1 bis ctrlX2 die Transistoren M1 bis M3 (siehe Figur 2) sowie den DC/DC Wandler IC2 (siehe ebenfalls Figur 2) so ansteuern, daß die für den funktionsrichtigen Betrieb der Lichtquelle beziehungsweise Lichtquellenschaltkreises und des zugehörigen Leuchtmittels benötigte Energie an das Leuchtmittel weitergeleitet wird.

Die in der vorstehenden Beschreibung, den Ansprüchen und den Zeichnungen offenbarten Merkmale können sowohl einzeln als auch in beliebiger Kombination für die Ausführung der Erfindung in ihren verschiedenen Ausgestaltungen von Bedeutung sein.

## Patentansprüche

1. Adapter für ein medizinisches Handstück (40), über den die von einer Versorgungseinheit (10) zur Verfügung stellbare Energieversorgung dem Handstück (40) zuführbar ist, wobei der Adapter umfaßt:
- eine eingangsseitige Kontaktvorrichtung (Vᵢₙ) zum Anschluß an die Energieversorgung der Versorgungseinheit;
- eine mit der eingangseitigen Kontaktvorrichtung in Verbindung stehende Eingangs-Schaltungsvorrichtung zur Erkennung der Art der von der Versorgungseinheit zur Verfügung gestellten Energieversorgung;
- eine ausgangsseitige Kontaktvorrichtung (Vₒᵤₜ) zum Anschluß an einen Lichtquellenschaltkreis einer Lichtquelle des medizinischen Handstücks;
- eine mit der ausgangsseitigen Kontaktvorrichtung (Vₒᵤₜ) in Verbindung stehende Ausgangs-Schaltungsvorrichtung zur Erkennung der Art der Lichtquelle und/oder des Lichtquellenschaltkreises, und
- einen Schaltkreis, der mit der Eingangs- und der Ausgangs-Schaltungsvorrichtung verbunden und so ausgelegt ist, daß er auf der Grundlage der von der Eingangs- und der Ausgangs-Schaltungsvorrichtung zur Verfügung gestellten Signale die von der Versorgungseinheit zur Verfügung gestellte Energieversorgung so aufbereitet, daß dem Lichtquellenschaltkreis des medizinischen Handstücks über die ausgangsseitige Kontaktvorrichtung (Vₒᵤₜ) eine Energie mit den erforderlichen Eigenschaften zur Verfügung stellbar ist.

2. Adapter nach Anspruch 1, **dadurch gekennzeichnet, daß** der Schaltkreis eine Logikschaltung (IC1) umfaßt.

3. Adapter nach Anspruch 2, **dadurch gekennzeichnet, daß** die Logikschaltung (IC1) zumindest teilweise durch einen Mikroprozessor und Software realisiert ist.

4. Adapter nach Anspruch 2 oder 3, **dadurch gekennzeichnet, daß** die Logikschaltung (IC1) zumindest teilweise durch Logikbausteine realisiert ist.

5. Adapter nach einem der Ansprüche 1 bis 4, **dadurch gekennzeichnet, daß** der Schaltkreis einen DC/DC-Wandler umfaßt.

6. Adapter nach Anspruch 5, **dadurch gekennzeichnet, daß** der Schaltkreis einen Step-Up-Konverter umfaßt.

7. Medizinisches Handstück (40) mit einer Lichtquelle und einem zugehörigen Lichtquellenschaltkreis, das umfaßt:
- eine eingangsseitige Kontaktvorrichtung (Vᵢₙ) zum Anschluß an die Energieversorgung der Versorgungseinheit;
- eine mit der eingangseitigen Kontaktvorrichtung (Vᵢₙ) in Verbindung stehende Eingangs-Schaltungsvorrichtung zur Erkennung der Art der von der Versorgungseinheit zur Verfügung gestellten Energieversorgung;
- einen Schaltkreis, der mit der Eingangs-Schaltungsvorrichtung verbunden und so ausgelegt ist, daß er auf der Grundlage der von der Eingangs-Schaltungsvorrichtung zur Verfügung gestellten Signale die von der Versorgungseinheit zur Verfügung gestellte Energieversorgung so aufbereitet, daß dem Lichtquellenschaltkreis des medizinischen Handstücks eine Energie mit den erforderlichen Eigenschaften zur Verfügung stellbar ist.

8. Medizinischer Handstück nach Anspruch 7, **dadurch gekennzeichnet, daß** der Schaltkreis eine Logikschaltung (IC1) umfaßt.

9. Medizinisches Handstück nach Anspruch 8, **dadurch gekennzeichnet, daß** die Logikschaltung (IC1) zumindest teilweise durch einen Mikroprozessor und Software realisiert ist.

10. Medizinisches Handstück nach Anspruch 8 oder 9, **dadurch gekennzeichnet, daß** die Logikschaltung (IC1) zumindest teilweise durch Logikbausteine realisiert ist.

11. Medizinisches Handstück nach einem der Ansprüche 7 bis 10, **dadurch gekennzeichnet, daß** der Schaltkreis einen DC/DC-Wandler umfaßt.

12. Medizinisches Handstück nach Anspruch 11, **dadurch gekennzeichnet, daß** der Schaltkreis einen Step-Up-Konverter umfaßt.

13. Medizinisches Handstück nach einem der Ansprüche 7 bis 12, **dadurch gekennzeichnet, daß** es als Lichtquelle mindestens eine LED umfaßt.

14. Medizinisches Handstück nach einem der Ansprüche 7 bis 13, **dadurch gekennzeichnet, daß** es als Lichtquelle mindestens eine Glühlampe umfaßt.

15. Medizinisches Handstück nach einem der Ansprüche 7 bis 14, **dadurch gekennzeichnet, daß** es als Lichtquelle mindestens eine Gasentladungslampe umfaßt.

16. Medizinische Versorgungseinheit (10), an die mindestens ein medizinisches Handstück (40) anschließbar ist, die umfaßt:
- eine Energieversorgungseinheit,
- eine ausgangsseitige Kontaktvorrichtung zum Anschluß an einen Lichtquellenschaltkreis einer Lichtquelle eines medizinischen Handstücks,
- eine mit der ausgangsseitigen Kontaktvorrichtung in Verbindung stehende Ausgangs-Schaltungsvorrichtung zur Erkennung der Art der Lichtquelle und/oder des Lichtquellenschaltkreises, und
- einen Schaltkreis, der mit der Ausgangs-Schaltungsvorrichtung verbunden und so ausgelegt ist, daß er auf der Grundlage der von der Ausgangs-Schaltungsvorrichtung zur Verfügung gestellten Signale die Energieversorgung so aufbereitet, daß dem Lichtquellenschaltkreis des mindestens einen medizinischen Handstücks über die ausgangseitige Kontaktvorrichtung eine Energie mit den erforderlichen Eigenschaften zur Verfügung stellbar ist.

17. Medizinische Versorgungseinheit nach Anspruch 16, **dadurch gekennzeichnet, daß** der Schaltkreis eine Logikschaltung (IC1) umfaßt.

18. Medizinische Versorgungseinheit nach Anspruch 17, **dadurch gekennzeichnet, daß** die Logikschaltung (IC1) zumindest teilweise durch einen Mikroprozessor und Software realisiert ist.

19. Medizinische Versorgungseinheit nach Anspruch 17 oder 18, **dadurch gekennzeichnet, daß** die Logikschaltung (IC1) zumindest teilweise durch Logikbausteine realisiert ist.

20. Medizinische Versorgungseinheit nach einem der Ansprüche 16 bis 19, **dadurch gekennzeichnet, daß** der Schaltkreis einen DC/DC-Wandler umfaßt.

21. Medizinische Versorgungseinheit nach Anspruch 20, **dadurch gekennzeichnet, daß** der Schaltkreis einen Step-Up-Konverter umfaßt.

22. Medizinische Versorgungseinheit nach einem der Ansprüche 16 bis 21, **dadurch gekennzeichnet, daß** sie mehrere voneinander unabhängige Schaltkreise für einen parallelen Anschluß von mindestens zwei medizinischen Handstücken umfaßt.

23. Verfahren zum Aufbereiten einer von einer Versorgungseinheit (10) zur Verfügung gestellten Energieversorgung für einen Lichtquellenschaltkreis einer Lichtquelle eines medizinischen Handstückes (40), das die folgenden Schritte umfaßt:
a) Prüfen der Art der von der Versorgungseinheit zur Verfügung gestellten Energieversorgung;
b) Prüfen der Art der Lichtquelle und/oder des Lichtquellenschaltkreises des medizinischen Handstücks (40);
c) automatisches Aufbereiten der von der Versorgungseinheit (10) zur Verfügung gestellten Energieversorgung mittels eines Schaltkreises in Abhängigkeit von den Ergebnissen der Schritte a) und b);

24. Verfahren nach Anspruch 23, **dadurch gekennzeichnet, daß** die Aufbereitung zumindest teilweise mittels Software realisiert wird.

25. Verfahren nach Anspruch 23 oder 24, **dadurch gekennzeichnet, daß** die Aufbereitung zumindest teilweise mittels Logikbausteinen realisiert wird.
